# EUROPEAN PATENT APPLICATION

(11) **EP 4 451 403 A1**
(43) Date of publication of application: **23.10.2024**
(21) Application number: 24153201.9
(22) Date of filing: 22.01.2024
(51) Int. Cl.: H01M 10/0525, H01M 50/103, H01M 50/148, H01M 50/176, H01M 50/528, H01M 50/531, H01M 50/533, H01M 50/536, H01M 50/538, H01M 50/547, H01M 50/553, H01M 50/566, H01M 50/586

(54) **SECONDARY BATTERY**

(30) Priority: 17.04.2023 KR 20230050197
(71) Applicant: Samsung SDI Co., Ltd., Yongin-si, Gyeonggi-do 17084 (KR)
(72) Inventor: Bae, Kwang Soo, 17084 Yongin-si, Gyeonggi-do (KR); Yong, Jun Sun, 17084 Yongin-si, Gyeonggi-do (KR); Lee, Jun Hyung, 17084 Yongin-si, Gyeonggi-do (KR); Kim, Jung Soo, 17084 Yongin-si, Gyeonggi-do (KR)
(74) Representative: Gulde & Partner

(57) **Abstract**

Disclosed is a secondary battery capable of a sufficient pressing force during welding between the terminal and the current collector plate to induce a strong bonding force, the secondary battery including an electrode assembly having first and second electrode tabs exposed on respective sides and a separator, a first current collection part electrically coupled to the first electrode tab, and including an edge part welded to the first electrode tab, and a central part, a case accommodating the electrode assembly and the first current collection part, a first cap plate sealing an opening of the case, a first terminal mechanically and electrically coupled to the first current collection part, and exposed to an exterior of the first cap plate, and a support between the central part of the first current collection part and the electrode assembly, wherein the central part protrudes further toward the first cap plate than the edge part.

## Description

### BACKGROUND

### 1. Field

Various embodiments of the present disclosure relate to a secondary battery.

### 2. Description of the Related Art

A secondary battery is a power storage system that provides suitable energy density, and that is capable of converting electrical energy into chemical energy and storing the same. Compared to non-rechargeable primary batteries, secondary batteries are rechargeable and are widely used in IT devices, such as smart phones, cellular phones, notebooks, and tablet PCs. Recently, interest in electric vehicles has increased to reduce environmental pollution, and accordingly, high-capacity secondary batteries are being adopted for electric vehicles. These secondary batteries have suitable characteristics, such as high density, high power, and stability.

The above information disclosed in this Background section is only for enhancement of understanding of the background of the art and therefore it can contain information that does not constitute prior art.

### SUMMARY

The present disclosure relates to a secondary battery capable of improving weldability between a terminal and a current collector plate by forming a sufficient pressing force during welding between the terminal and the current collector plate, and by inducing strong bonding force.

A secondary battery according to embodiments of the present disclosure may include an electrode assembly having a first electrode tab and a second electrode tab exposed on respective sides, a first current collection part electrically coupled to the first electrode tab, and including an edge part welded to the first electrode tab, and a central part, a case accommodating the electrode assembly and the first current collection part, a first cap plate sealing an opening of the case, a first terminal mechanically and electrically coupled to the first current collection part, and exposed to an exterior of the first cap plate, and a support between the central part of the first current collection part and the electrode assembly, wherein the central part protrudes further toward the first cap plate than the edge part. The electrode assembly further includes a separator.

The support may include an insulating material.

The first current collection part may include a first current collector plate coupled to the first electrode tab by welding, and a second current collector plate contacting an outer surface of the first current collector plate, and contacting and welding-bonded to an inner surface of the first terminal.

The central part may have a central region protruding outwardly, and an outer surface coupled to an inner side of the second current collector plate by welding, wherein the edge part extends from the central part to respective sides, and is welded to the first electrode tab of the electrode assembly. The first current collector plate may comprise the central part, the central part may have an outer surface coupled to an inner side of the second current collector plate by welding. The first current collector plate may further comprise the edge part, wherein the edge part extends from the central part to respective sides and is welded to the first electrode tab of the electrode assembly.

The first current collector part may further include a connection part between the central part and the edge part and inclined in a direction from the central part to the edge part.

The secondary battery may further include a protrusion part that protrudes outwardly from a central region of the second current collector plate.

An outer surface of the protrusion part may be coupled to the inner surface of the first terminal by contacting and welding.

The secondary battery may further include an insulator between the first terminal and the first cap plate.

A size of the central part of the first current collector plate may be less than that of an inner surface of the second current collector plate.

The support may press the first current collection part toward the first terminal. In other words, the support may be configured to press the first current collection part toward the first terminal. So, the support may be configured as a spring to press the first current collection part toward the first terminal.

The electrode assembly may include a Z-stack electrode assembly in which a positive electrode plate and a negative electrode plate are inserted into respective sides of a separator bent into a Z-stack.

The separator may be fixed by an adhesive in the electrode assembly. The separator of the electrode assembly may be fixed to the support by a first adhesive.

The adhesive may be inside the support. The adhesive may be the first adhesive.

The support may be a plate-shaped spring.

The support may include an upper surface portion contacting the central part of the first current collector plate, a lower surface portion opposite the upper surface portion, contacting the electrode assembly, and defining a space portion in which respective cut ends are spaced apart from each other, and a side portion connecting the upper surface portion and the lower surface portion.

The space portion may have an adhesive passing therethrough. Said adhesive may be the first adhesive mentioned above.

The support may include an upper surface portion contacting the central part of the first current collector plate, a lower surface portion opposite the upper surface portion, contacting the electrode assembly, and defining a space portion in which respective cut ends are spaced apart from each other, and a side portion connecting the upper surface portion and the lower surface portion. The support may include a first adhesive formed inside the support and passing through the space portion to fix the separator of the electrode assembly in the space portion. In other words, the first adhesive contacts and fixes the separator of the electrode assembly to the space portion of the support.

The support may include any one of a C type, an Ω type, or a bellows type.

An open hole may be defined in the support from the upper surface portion to a region of the side portion or to the lower surface portion.

The secondary battery may further include a clad sheet between the first current collection part and the first terminal.

### BRIEF DESCRIPTION OF DRAWINGS

FIG. 1 is a perspective view of a secondary battery according to one or more embodiments of the present disclosure.
FIG. 2 is a cross-sectional view of the secondary battery of FIG. 1, taken along the line 2-2'.
FIG. 3 is a partial cross-sectional view of an enlarged portion 3 in FIG. 2.
FIG. 4 is an exploded perspective view showing a terminal of the secondary battery of FIG. 1 before being coupled to a current collection part.
FIGS. 5A to 5C are a plan view, a front view, and a perspective view of the support of FIG. 1.
FIGS. 6 to 8 are perspective views showing one or more other embodiments of the support of FIG. 1.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The present disclosure covers all modifications, equivalents, and replacements within the idea and technical scope of the present disclosure. Further, each of the features of the various embodiments of the present disclosure may be combined or combined with each other, in part or in whole, and technically various interlocking and driving are possible. Each embodiment may be implemented independently of each other or may be implemented together in an association.

In the drawings, the relative sizes of elements, layers, and regions may be exaggerated for clarity and/or descriptive purposes. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "upper side," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

Further, the phrase "in a plan view" means when an object portion is viewed from above, and the phrase "in a schematic cross-sectional view" means when a schematic cross-section taken by vertically cutting an object portion is viewed from the side. The terms "overlap" or "overlapped" mean that a first object may be above or below or to a side of a second object, and vice versa. Additionally, the term "overlap" may include layer, stack, face or facing, extending over, covering, or partly covering or any other suitable term as would be appreciated and understood by those of ordinary skill in the art. The expression "not overlap" may include meaning, such as "apart from" or "set aside from" or "offset from" and any other suitable equivalents as would be appreciated and understood by those of ordinary skill in the art. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component is referred to as being "formed on," "on," "connected to," or "(operatively or communicatively) coupled to" another element, layer, region, or component, it may be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it may be directly electrically connected or coupled to the other layer, region, and/or component or intervening layers, regions, or components may be present. However, "directly connected/directly coupled," or "directly on," refers to one component directly connecting or coupling another component, or being on another component, without an intermediate component. In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components such as "between," "immediately between" or "adjacent to" and "directly adjacent to" may be construed similarly. In addition, it will also be understood that when an element or layer is referred to as being "between" two elements or layers, it may be the only element or layer between the two elements or layers, or one or more intervening elements or layers may also be present.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expression such as "at least one of A and B" and "at least one of A or B" may include A, B, or A and B. As used herein, "or" generally means "and/or," and the term "and/or" includes any and all combinations of one or more of the associated listed items. For example, the expression such as "A and/or B" may include A, B, or A and B. Similarly, expressions such as "at least one of," "a plurality of," "one of," and other prepositional phrases, when preceding a list of elements, modify the entire list of elements and do not modify the individual elements of the list.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the spirit and scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

In the examples, the x-axis, the y-axis, and/or the z-axis are not limited to three axes of a rectangular coordinate system, and may be interpreted in a broader sense. For example, the x-axis, the y-axis, and the z-axis may be perpendicular to one another, or may represent different directions that are not perpendicular to one another. The same applies for first, second, and/or third directions.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

When one or more embodiments may be implemented differently, a specific process order may be performed differently from the described order. For example, two consecutively described processes may be performed substantially at the same time or performed in an order opposite to the described order.

As used herein, the term "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

The term adhesive (e.g. first adhesive) may be an adhesive resin or polymer.

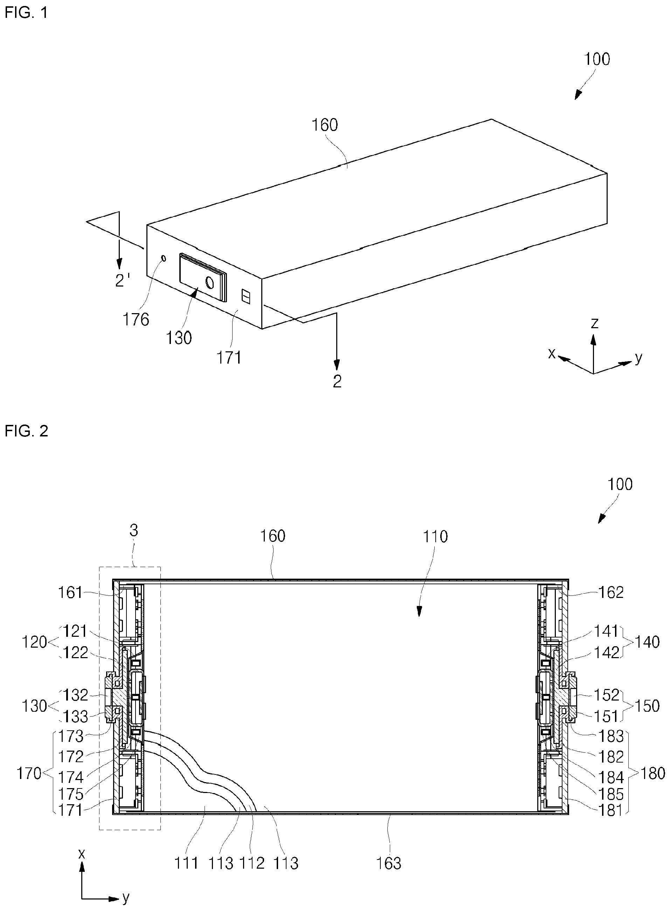

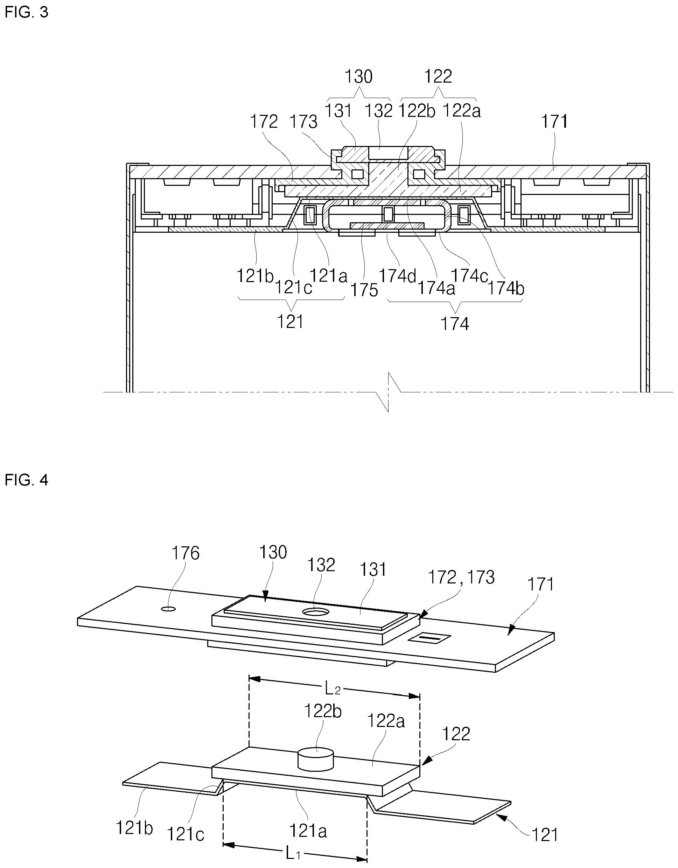

Referring to FIG. 1, a perspective view of a secondary battery according to one or more embodiments of the present disclosure is shown. Referring to FIG. 2, a cross-sectional view of the secondary battery of FIG. 1 taken along the line 2-2' is shown. Referring to FIG. 3, a partial cross-sectional view of an enlarged portion 3 in FIG. 2 is shown. Hereinafter, in describing the secondary battery 100 of the present disclosure, the structure of the secondary battery 100 will be described on the basis of the secondary battery 100 shown in FIG. 1.

As shown in FIGS. 1 to 3, the secondary battery 100 may include an electrode assembly 110, a first current collection part 120, a first terminal 130, a second current collection part 140, a second terminal. 150, a case 160, a first cap assembly 170, and a second cap assembly 180.

The electrode assembly 110 may be formed by winding or stacking a laminate of a first electrode plate 111, a separator 113, and a second electrode plate 112, which are formed in a thin plate shape or film shape. If the electrode assembly 110 is a wound laminate, a winding axis may be parallel to the longitudinal direction y of the case 160. In addition, the electrode assembly 110 may be a stack type, rather than a winding type, and the shape of the electrode assembly 110 is not limited in the present disclosure. In addition, the electrode assembly may be a Z-stack electrode assembly in which a positive electrode plate and a negative electrode plate are inserted into respective sides of a separator bent into a Z-stack. In addition, one or more electrode assemblies 110 may be stacked such that long sides of the electrode assemblies 110 are adjacent to each other and accommodated in the case 160. In the present disclosure, the number of electrode assemblies 110 is not limited.

The first electrode plate 111 of the electrode assembly 110 may serve as a negative electrode, and the second electrode plate 112 may serve as a positive electrode. In one or more embodiments, the reverse is also possible.

The first electrode plate 111 may include a first electrode tab (or a first uncoated portion) that is formed by applying a first electrode active material, such as graphite or carbon, to a first electrode current collector plate made of a metal foil, such as copper, a copper alloy, nickel, or a nickel alloy, and that is a region to which the first electrode active material is not applied. The first electrode tab may be a passage for current flow between the first electrode plate 111 and the first current collection part 120. In one or more embodiments, if manufacturing the first electrode plate 111, the first electrode tab may be formed by being cut in advance to protrude to one side, and may protrude more to one side than the separator 113 without separate cutting.

The second electrode plate 112 may include a second electrode tab (or second uncoated portion) that is formed by applying a second electrode active material, such as a transition metal oxide, to a second electrode current collector plate made of a metal foil, such as aluminum or an aluminum alloy, and that is a region to which the second electrode active material is not applied. The second electrode tab may be a passage for current flow between the second electrode plate 112 and the second current collection part 140. In one or more embodiments, if manufacturing the second electrode plate 112, the second electrode tab may be formed by being cut in advance to protrude to the other side, and may protrude more to the other side than the separator 113 without separate cutting.

In one or more embodiments, the first electrode tab may be located on the left side of the electrode assembly 110, and the second electrode tab may be located on the right side of the electrode assembly 110. Here, the left and right terms are for convenience of explanation based on the secondary battery 100 shown in FIGS. 1 and 2, and the positions of the secondary battery 100 may be changed if the secondary battery 100 rotates left and right or up and down. Hereinafter, each component will be described on the basis of the secondary battery 100 shown in FIGS. 1 to 3.

In one or more embodiments, the separator 113 is positioned between the first electrode plate 111 and the second electrode plate 112 to reduce or prevent the likelihood of a short circuit, and to enable the movement of lithium ions, and may include polyethylene, polypropylene, or a composite film of polyethylene and polypropylene. In addition, the separator 113 may be replaced with an inorganic solid electrolyte, such as a sulfide, an oxide, or a phosphate compound that does not require a liquid or gel electrolyte.

The first electrode tab of the first electrode plate 111 and the second electrode tab of the second electrode plate 112 are positioned at respective ends of the electrode assembly 110. In one or more embodiments, the electrode assembly 110 may be accommodated in the case 160 together with an electrolyte. In one or more embodiments, the electrolyte may include a lithium salt, such as LiPF₆ or LiBF₄ in an organic solvent, such as ethylene carbonate (EC), propylene carbonate (PC), diethyl carbonate (DEC), ethyl methyl carbonate (EMC), or dimethyl carbonate (DMC). In addition, the electrolyte may be in a liquid or gel phase. In one or more embodiments, if an inorganic solid electrolyte is used, the electrolyte may be omitted.

In addition, the electrode assembly 110 is located such that the first current collection part 120 and the second current collection part 140 are welded to, and connected to, the first electrode tab of the first electrode plate 111 and the second electrode tab of the second electrode plate 112 exposed to respective sides.

The first current collection part 120 may be made of metal, and may electrically connect the first electrode plate 111 and the first terminal 130 to each other. Referring to FIG. 4, an exploded perspective view showing a terminal of the secondary battery of FIG. 1 before being coupled to a current collection part is shown. Hereinafter, the structure and coupling relationship of the first current collection part 120 will be described with reference to FIG. 4.

The first current collection part 120 may be accommodated inside the case 160, and interposed between the first cap plate 171 and the electrode assembly 110.

The first current collection part 120 may include a first current collector plate 121 contacting and coupled to the first electrode tab (e.g., the uncoated portion) of the first electrode plate 111, and may include a second current collector plate 122 contacting and coupled to the first terminal 130. The first current collection part 120 may be made of copper or a copper alloy.

The first current collector plate 121 extends along the first direction (e.g., the x direction), which is the longitudinal direction of the first cap plate 171, the first cap plate 171 being one side of the electrode assembly 110, and may be substantially plate shaped. The first current collector plate 121 may be coupled to the first electrode plate 111 by welding in a state of being in contact with the first electrode tab exposed to one end of the electrode assembly 110, and thus may have the same polarity as the first electrode plate 111.

The first current collector plate 121 may include a central part 121a in which a central region protrudes outward, and an edge part 121b extending from the central part 121a to both sides.

The central part 121a may be an outer surface coupled to the inner side of the second current collector plate 122 by welding. In other words, the outer surface of the central part 121a may be in direct contact with the inner side of the second current collector plate 122.

The edge part 121b may have an inner surface contacting and welded to the first electrode tab of the electrode assembly 110 to then be coupled thereto. Compared to the edge part 121b, the central part 121a may protrude in an outward direction where the first cap plate 171 is located. The central part 121a may be spaced apart from one side of the electrode assembly 110.

A connection part 121c, which is inclined in a direction from the central part 121a to the edge part 121b, may be formed between the central part 121a and the edge part 121b. Here, the central part 121a and the edge part 121b may be parallel to each other. In addition, bent parts may be provided between the central part 121a and the connection part 121c, and between the connection part 121c and the edge part 121b. The central part 121a is located closer to the first cap plate side than the edge part 121b.

In one or more embodiments, the first current collector plate 121 may include the connection part 121c and the edge part 121b provided on both sides in the first direction (e.g., x direction) with respect to the central part 121a.

A size of the central part 121a of the first current collector plate 121 may be smaller than that of the inner surface of the second current collector plate 122. That is, a length L1 of the central part 121a of the first current collector plate 121 in the first direction may be less than a length L2 of the inner surface of the second current collector plate 122. In addition, an area of the central part 121a of the first current collector plate 121 may be less than that of the inner surface of the second current collector plate 122.

The second current collector plate 122 extends along the first direction (e.g., x direction) and may be substantially plate shaped. The second current collector plate 122 may (directly) contact, and may be welded to, the outer surface of the first current collector plate 121, and may contact, and may be welded to, the inner surface of the first terminal 130.

The second current collector plate 122 may further include a protrusion part 122b in which a central region 122a on an outer surface protrudes outwardly. The outer surface of the protrusion part 122b is coupled to the inner surface of the first terminal 130 by contacting and welding.

A size of the inner surface of the second current collector plate 122 may be larger than that of the central part 121a of the first current collector plate 121. That is, a length L2 of the inner surface of the second current collector plate 122 in the first direction (e.g., x direction) may be larger than the length L1 of the central part 121a of the first current collector plate 121.

The first terminal 130 is made of metal and may (directly) contact, and may be welded to, the protrusion part 122b to then be electrically connected thereto. In one or more embodiments, the first terminal 130 may include a first terminal plate 131 and a first terminal groove 132. The first terminal 130 may be made of aluminum or an aluminum alloy. The first terminal 130 and the first current collection part 120 may be made of different metals. In one or more embodiments, a clad sheet may be further provided between the first terminal 130 and the first current collection part 120. The clad sheet may couple and electrically connect the first terminal 130 and the first current collection part 120, which may be made of different metals, to each other. The clad sheet may be a sheet in which an aluminum sheet and a copper sheet are bonded by thermal compression. In one or more embodiments, the clad sheet may be a sheet in which 2T of aluminum and 0.5 to 0.7T of copper are bonded by thermal compression. The aluminum sheet of the clad sheet may be coupled to the first terminal 130 by welding, and the copper sheet may be coupled to the first current collection part 120 by welding.

The first terminal plate 131 may be located outside or above the first cap plate 171. In addition, the first terminal groove 132 may be provided in an inward direction from an outer surface of the first terminal plate 131. The first terminal plate 131 may have a thinner region in which the first terminal groove 132 is provided, as compared to other regions thereof. The first terminal plate 131 may be coupled to the second current collector plate 122 by welding from the outside of the first cap plate 171 through the first terminal groove 132.

The first terminal groove 132 may be located in a partial region of the first terminal plate 131. The first terminal groove 132 may be located in approximately the central region of the first terminal plate 131, but may be located in a region corresponding to the current collector through-hole 122c of the second current collector plate 122.

Additionally, a first insulator 172 may be further interposed between the first terminal plate 131 and the first cap plate 171. In addition, a first seal gasket 173 may be further interposed between the outer surface of the first terminal plate 131 and the first cap plate 171, thereby sealing the first terminal 130 and the first cap plate 171 to each other.

The first terminal plate 131 may contact, and may be coupled to, the second current collector plate 122 of the first current collection part 120 on one side located on the right side.

In the first terminal 130, the first terminal plate 131 may be exposed, and may protrude from the outside of the first cap plate 171.

The second current collection part 140 is made of metal, and may electrically connect the second electrode plate 112 and the second terminal 150 to each other. The second current collection part 140 is a metal plate, and may include a third current collector plate 141 contacting and coupled to the second electrode tab of the second electrode plate 112, and a fourth current collector plate 142 contacting and coupled to the second terminal 150. In addition, the second current collection part 140 may be coupled to the electrode assembly 110 and the second terminal 150 in a form that is symmetrical to the first current collection part 120 on the basis of the electrode assembly 110. In addition, the second current collection part 140 may be made of aluminum or an aluminum alloy.

The second terminal 150 is made of metal, and may be electrically connected to the second current collection part 140. In one or more embodiments, the second terminal 150 may include a second terminal plate 151 and a second terminal groove 152.

Here, the second terminal plate 151 may be located inside the second cap plate 181. In one or more embodiments, a second insulator 182 may be further interposed between the second terminal plate 151 and the second cap plate 181. In addition, a second seal gasket 183 may be further interposed between the second terminal plate 151 and the second cap plate 181.

The second terminal 150 may have the same shape and structure as the first terminal 130. However, the second terminal 150 may be coupled to the electrode assembly 110 through the second current collection part 140 in a form that is symmetrical to the first terminal 130 on the basis of the electrode assembly 110. In addition, the second terminal 150 may be made of aluminum or an aluminum alloy. In addition, the second terminal 150 and the second current collection part 140 are made of the same metal, and thus, may be directly coupled to each other by welding.

The case 160 has a substantially hollow rectangular parallelepiped shape having openings 161 and 162 formed on both sides, and the electrode assembly 110 coupled to the first current collection part 120 and the second current collection part 140 may be inserted into the inside of the case 160 through the openings 161 and 162.

The case 160 may include upper and lower surfaces of the rectangle extending along the second direction (e.g., y direction), which is the longitudinal direction of the case, and long sides of two rectangles extending along the second direction (e.g., y direction) connecting the long sides of the upper and lower surfaces. The case 160 may have the upper surface, the lower surface, and the two long side surfaces integrally formed with each other.

The case 160 may have a vent hole passing through the long side surface. A safety vent 163 may be installed in a vent hole of the case 160. In addition, the safety vent 163 may have a notch that is thinner than other regions, and that may be opened by a pressure (e.g., a set pressure).

The first cap assembly 170 may be coupled to the opening 161 on the left side of the case 160. In one or more embodiments, the first cap assembly 170 may include a first cap plate 171, a first insulator 172, a first seal gasket 173, a first support 174, and a first adhesive 175.

The first cap plate 171 has a flat rectangular plate shape, and may seal the left-side opening 161 of the case 160. The first cap plate 171 may have a terminal hole passing through between an outer surface and an inner surface and an electrolyte injection port. The protrusion part 122b of the second current collector plate 122 may pass through the terminal hole of the first cap plate 171, and may be coupled to the first terminal plate 131. In addition, the electrolyte injection port may be sealed by a stopper 176 after the first cap plate 171 is coupled to the case 160, and after an electrolyte is injected into the case 160.

The first insulator 172 may be interposed between the first cap plate 171 and the second current collector plate 122. The first insulator 172 may be in close contact with the first cap plate 171, and may also be in contact with the first seal gasket 173. The first insulator 172 may be made of an insulating material, and may insulate the first cap plate 171 and the first terminal plate 131 from each other.

In addition, the first seal gasket 173 is made of an insulating material, and is provided between the first cap plate 171 and the first terminal plate 131, or is provided on the outer surface of the first terminal plate 131, thereby sealing the first cap plate 171 and the first terminal plate 131 with each other. The first seal gasket 173 reduces or prevents external moisture penetrating into the secondary battery 100, or reduces or prevents the likelihood of electrolyte contained in the secondary battery 100 leaking out. The first seal gasket 173 may be manufactured with the first insulator 172 in an insert injection method to be installed.

That is, the first cap plate 171 may be electrically separated from the first terminal 130 and the second current collector plate 122 by means of the first insulator 172 and the first seal gasket 173.

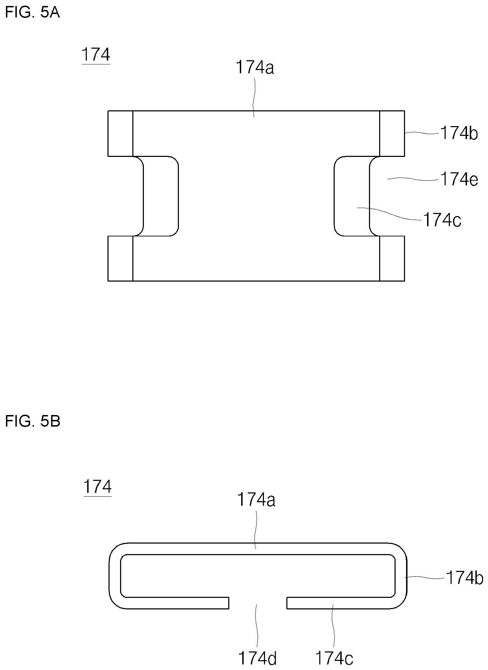

FIGS. 5A to 5C are a plan view, a front view, and a perspective view of the support of FIG. 1.

The first support 174 may be interposed between the first current collection part 120 and the electrode assembly 110. The first support 174 may be made of an insulating material, and may press the first current collection part 120 toward the first terminal 130. By pressing the first current collection part 120 toward the first terminal 130, the first support 174 may bring the second current collector plate 122 of the first current collection part 120 and the first terminal 130 into close contact with each other. That is, by means of the first support 174, the second current collector plate 122 and the first terminal 130 are welded and coupled to each other while being in close contact with each other, thereby improving bonding strength.

The first support 174 may be a plate-shaped spring. In FIGS. 5A to 5C, the first support 174 may be a plate-shaped spring, and may be formed in a C-type structure in which both sides thereof are bent at least twice.

In one or more embodiments, the first support 174 may include an upper surface portion 174a, a lower surface portion 174c opposite to the upper surface portion 174a, and a side surface portion 174b connecting the upper surface portion 174a and the lower surface portion 174c. The upper surface portion 174a may be flat to contact a region of the inner surface of the first current collector plate 121. In one or more embodiments, the upper surface portion 174a may have open holes 174e formed on both sides to facilitate bending and to improve elasticity. The upper surface portion 174a may have an area that is less than that of the first current collector. The lower surface portion 174c is formed to be flat so as to contact a partial region of one side of the electrode assembly 110, and has a space portion 174d at a substantially central portion of the lower surface portion 174c so as to make the lower surface portion 174c divided in a direction perpendicular to the first direction (e.g., x direction). The lower surface portion 174c may be positioned in a divided form on both sides of the space portion 174d in a direction perpendicular to the first direction (e.g., x direction). The side surface portion 174b may be provided on both sides of the upper surface portion 174a and the lower surface portion 174c to connect the upper surface portion 174a and the lower surface portion 174c. The open holes 174e may be formed from the upper surface portion 174a to partial regions of the side surface portion 174b and/or the lower surface portion 174c.

The space portion 174d is located inside the first support 174, and is located on the lower surface portion 174c so that the first adhesive 175 may pass therethrough to be fixed. The first adhesive 175 is formed inside the first support 174 so that the separator of the electrode assembly 110 may be inserted into, and fixed to, the space portion 174d. The first adhesive 175 is located on the upper surface of the lower surface portion 174c in the inward direction of the first support 174.

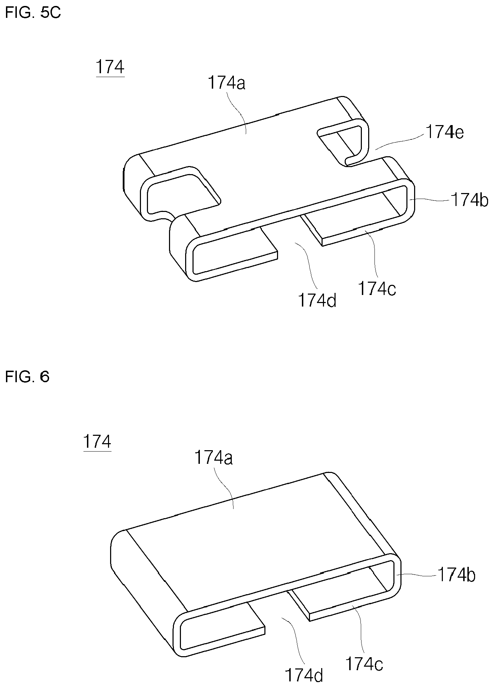

In one or more other embodiments, the first support 174 may be a plate-shaped spring, and may have a C-type structure without an open hole 174e, as shown in FIG. 6.

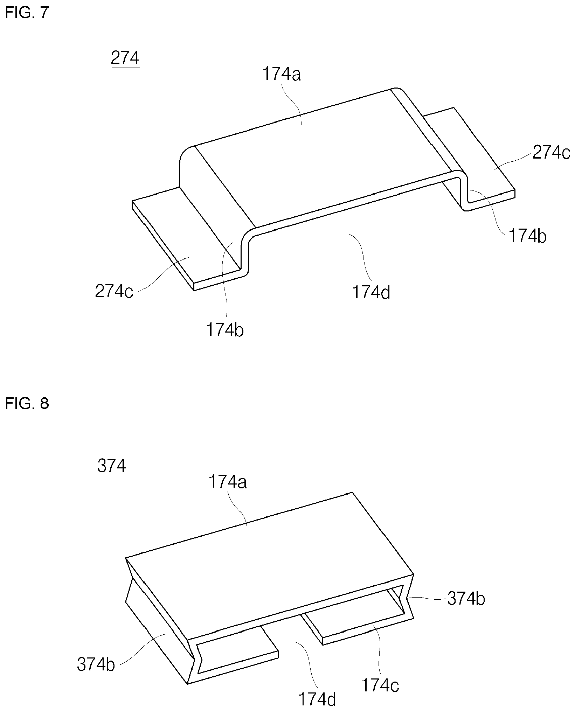

In one or more other embodiments, the first support 174 may be a plate-shaped spring, and may be a Ω-type support in which the lower surface portion 274c extends outwardly from the side surface portion 174b, as shown in FIG. 7. Like the first support 174 shown in FIG. 5C, the support 274 may further include open holes.

In one or more other embodiments, the first support 174 may be a plate-shaped spring and may be formed in a bellows-type support 374 in which at least one bent part is provided on the side surface portion 374b, as shown in FIG. 8. Like the first support 174 shown in FIG. 5C, the support 374 may further include open holes.

The second cap assembly 180 may be coupled to the opening 162 on the right side of the case 160. In one or more embodiments, the second cap assembly 180 may include a second cap plate 181, a second insulator 182, a second seal gasket 183, a second support 184, and a second adhesive 185. The second cap assembly 180 may have the same as the first cap assembly 170 in terms of shape and structure. In addition, the coupling shape and structure of the second cap assembly 180 and the second terminal 150 may be the same as those of the first cap assembly 170 and the first terminal 130. However, the coupling shape of the second cap assembly 180 and the second terminal 150 may be symmetrical to that of the first cap assembly 170 and the first terminal 130 on the basis of the case 160.

In the secondary battery 100, the first cap assembly 170 that is coupled to the first terminal 130 is coupled to one side opening of the case 160, and the second cap assembly 180 that is coupled to the second terminal 150 is coupled to the other side opening of the case 160, and thus, the first terminal 130 and the second terminal 150 are located on respective sides of the case 160. By including the first terminal 130 and the second terminal 150 on both sides of the secondary battery 100, respectively, if a plurality of secondary batteries 100 are combined in a module form, in one or more embodiments, a cooling member may be coupled to the upper and lower regions of the case 160, respectively, to reduce deterioration of the secondary battery 100 and improve cooling performance.

In one or more embodiments, in a state in which long side surfaces of the plurality of secondary batteries 100 are located to face each other, the battery module may electrically connect first terminals and/or second terminals respectively exposed to both sides.

In addition, by including the first terminal 130 and the second terminal 150 on both sides of the secondary battery 100, respectively, if a plurality of secondary batteries 100 are combined in a module form, a charge/discharge current may flow through each terminal in both directions, so that two terminals may be provided on one side, and thus, deterioration may be improved as compared to a case where charging and discharging current flows through two terminals on one side. In addition, if a plurality of secondary batteries 100 are combined in a module form, the respective terminals may be connected in both directions, and thus, high space utilization may be achieved.

As described above, in the secondary battery of the present disclosure, by forming sufficient pressing force if welding a terminal and a current collector plate, the weldability of the terminal and the current collector plate may be improved, and a strong bonding force may be induced.

In addition, in the secondary battery of the present disclosure, by including a support between a current collector plate and an electrode assembly, even if the amount of interference is excessive, damage to the electrode assembly may be reduced or prevented, and impact applied to the electrode assembly due to vibration after welding may be attenuated.

While the foregoing embodiments are only some embodiments for carrying out the secondary battery according to the present disclosure, it will be understood by a person skilled in the art that various changes in form and details may be made therein without departing from the spirit and scope of the present disclosure as defined by the following claims, with functional equivalents thereof to be included therein.

## Claims

1. A secondary battery (100) comprising:
an electrode assembly (110) having a first electrode tab and a second electrode tab exposed on respective sides and a separator (113);
a first current collection part (120) electrically coupled to the first electrode tab, and comprising an edge part (121b) welded to the first electrode tab, and a central part (121a);
a case (160) accommodating the electrode assembly (110) and the first current collection part (120);
a first cap plate (171) sealing an opening (161, 162) of the case (160);
a first terminal (130) mechanically and electrically coupled to the first current collection part (120), and exposed to an exterior of the first cap plate (171); and
a support (174, 274, 374) between the central part (121a) of the first current collection part (120) and the electrode assembly (110),
wherein the central part (121a) protrudes further toward the first cap plate (171) than the edge part (121b).

2. The secondary battery (100) according to claim 1, wherein the support (274, 374) comprises an insulating material.

3. The secondary battery (100) according to claim 1 or 2, wherein the first current collection part (120) comprises:
a first current collector plate (121) coupled to the first electrode tab by welding; and
a second current collector plate (122) contacting an outer surface of the first current collector plate (121), and contacting and welding-bonded to an inner surface of the first terminal (130).

4. The secondary battery (100) according to claim 3, wherein first current collector plate (121) comprises the central part (121a), the central part (121a) has an outer surface coupled to an inner side of the second current collector plate (122) by welding;
the first current collector plate (121) further comprises the edge part (121b), the edge part (121b) extends from the central part (121a) to respective sides, and is welded to the first electrode tab of the electrode assembly (110); and
the first current collector part further comprises a connection part (121c) between the central part (121a) and the edge part (121b) and inclined in a direction from the central part (121a) to the edge part (121b).

5. The secondary battery (100) according to one of claim 3 or 4, wherein the second current collector plate (122) further comprises a protrusion part (122b) that protrudes outwardly from a central region (122a) of the second current collector plate (122), and wherein an outer surface of the protrusion part (122b) is coupled to the inner surface of the first terminal (130) by contacting and welding.

6. The secondary battery (100) according to one of claims 4 or 5, wherein a size of the central part (121a) of the first current collector plate (121) is less than that of an inner surface of the second current collector plate (122).

7. The secondary battery (100) according to one of the preceding claims, wherein the support (174, 274, 374) is configured to press the first current collection part (120) toward the first terminal (130).

8. The secondary battery (100) according to one of the preceding claims, wherein the electrode assembly (110) comprises a Z-stack electrode assembly (110) in which a positive electrode plate and a negative electrode plate are inserted into respective sides of the separator (113) bent into a Z-stack.

9. The secondary battery (100) according to one of the preceding claims, wherein the support (274, 374) is a plate-shaped spring.

10. The secondary battery (100) according to one of the preceding claims, wherein the support (174, 274, 374) comprises:
an upper surface portion (174a) contacting the central part (121a);
a lower surface portion (174c, 274c) opposite the upper surface portion (174a), contacting the electrode assembly (110), and defining a space portion (174d) in which respective cut ends are spaced apart from each other; and
a side portion (174b, 374b) connecting the upper surface portion (174a) and the lower surface portion (174c, 274c).

11. The secondary battery (100) according to one of the preceding claims, wherein the separator (113) of the electrode assembly (110) is fixed to the support (174, 274, 374) by a first adhesive (175), and wherein the first adhesive is preferably inside the support (174, 274, 374).

12. The secondary battery (100) according to claims 10 and 11, wherein the space portion (174d) has the first adhesive passing therethrough.

13. The secondary battery (100) as claimed in claim 10, wherein the support (274, 374) comprises any one of a C type, an Ω type, or a bellows type.

14. The secondary battery (100) according to claim 10, wherein an open hole (174e) is defined in the support (174, 274, 374) from the upper surface portion (174a) to a region of the side portion or to the lower surface portion (174c, 274c).

15. The secondary battery (100) according to one of the preceding claims, further comprising a clad sheet between the first current collection part (120) and the first terminal (130).
